# EUROPEAN PATENT SPECIFICATION

(11) **EP 2 188 520 B1**
(45) Date of publication and mention of the grant of the patent: **06.04.2016**
(21) Application number: 08788617.2
(22) Date of filing: 31.07.2008
(51) Int. Cl.: F03B 13/10

(54) **APPARATUS FOR GENERATING ELECTRICITY FROM MARINE ENERGY COMPRISING DC GENERATORS IN SERIES AND METHOD THEREOF**
VORRICHTUNG ZUR ERZEUGUNG VON ELEKTRIZITÄT AUS MEERESENERGIE MIT IN REIHE GESCHALTETEN GLEICHSTROMGENERATOREN UND VERFAHREN DAFÜR
DISPOSITIF POUR GENERER D'ELECTRICITE A PARTIR DE L'ENERGIE MARINE AVEC GENERATEURS DE COURANT CONTINU EN SERIE

(30) Priority: 01.08.2007 GB 0714943
(43) Date of publication of application: 26.05.2010
(73) Proprietor: ALDERNEY RENEWABLE ENERGY LIMITED, Le Val Alderney GY9 3UL (GB)
(72) Inventor: Michael Noel Eggleton, Caversham RG4 7RE (GB)
(74) Representative: Stanley, David William
(86) International application number: PCT/GB2008/050643
(87) International publication number: WO 2009/016409

(56) References cited:
- WO-A-2005/076445
- US-A1- 2005 073 151
- US-A1- 2006 266 038
- US-A1- 2007 164 568
- US-A1- 2009 141 522

## Description

The present invention relates to the generation of electricity from marine energy.

Much attention is directed at the present time to the generation of electricity from renewable sources. Windmill generators can be seen in many parts of the world. Much interest has been shown in generating electricity from wave power and from the rise and fall of tides. In some parts of the world, fast-running tides can provide a source of energy that can be harnessed by placing turbines in the path of tidal currents ("tidal streams"), rather than making use of the rise and fall of tidal waters.

In the context of this specification, the energy available from the sea or inland waters, whether in the form of wave power, rise and fall of tidal waters, tidal current flows, or any other way, is referred to conveniently as "marine energy".

Although various proposals have been made for different kinds of turbines and generators, there have been no satisfactory proposals to date for generating commercially useful amounts of power from marine energy.

Preferred embodiments of the present invention aim to provide apparatus for and mediods of generating electricity from marine energy, which may be improved in this respect.

US 2005/073151 Diamontopoulos proposes an electric generation device and suggests that a plurality of the devices may be combined. However, as the devices include a diode bridge, it is assumed that the actual electricity generators generate ac electricity. US 2006/266038 Krouse shows "energy cells" of an array all connected in parallel, by means of a special tray. A number of such arrays are connected in parallel, as a result of which all of the "energy cells" are connected in parallel. The disclosed energy cells of Krouse comprise AC machines.

According to one aspect of the present invention, there is provided apparatus for generating electricity from marine energy, the apparatus comprising a plurality of dc output generators, each arranged to generate dc electricity in response to the expenditure of marine energy, the outputs of the generators being connected in series to produce a summed voltage that it is greater than the output voltage of each generator, wherein said generators are arranged in a plurality of strings that are connected in parallel, each string comprising a plurality of the generators connected in series.

In the context of this specification, for ease of reference, die terms "dc output generator" and "dc generator" mean an electrical machine arranged to generate dc power, including a turbine or the like arranged to derive power from tidal water flow to drive the electrical machine.

Preferably, said summed voltage is 25Kv or less.

Preferably, said generators are arranged in a plurality of strings that are connected in parallel, each string comprising a plurality of the generators connected in series.

Preferably, said plurality of strings is arranged to produce a total output current of 2500 amperes or less.

Preferably, apparatus as above comprises an output bus connected to receive the outputs of said strings.

Preferably, apparatus as above comprises isolating means arranged to isolate any desired string from the output bus.

Preferably, said isolating means comprises a plurality of circuit-breakers, each arranged in series with a respective one of said strings, and control means for controlling operation of said circuit breakers.

Preferably, apparatus as above comprises a waterproof housing having a plurality of ports, wherein said output bus is contained within said housing, an output cable connected to said output bus passes through a first one of said ports and input cables connecting the outputs of said strings to said output bus pass through the other said ports.

Preferably, said housing is of generally circular shape, said first port is located at or adjacent a centre of the circle, and the other said ports are located at or adjacent the periphery of the circle.

Preferably, said output bus is of generally circular shape.

Preferably, apparatus as above further comprises output conductors arranged to conduct the summed output of said generators to a shore station as dc power.

Preferably, the distance of said shore station from said generators is in the range 1 to 30km.

Apparatus as above may further comprise inverter means arranged to invert the summed dc output of the generators to ac power.

Preferably, apparatus as above further comprises bypass means arranged selectively to bypass any desired one of the generators whilst maintaining series continuity of the other generators in the series.

Said bypass means may comprise a respective switch in parallel with each of the generators.

Power for operating each switch may be derived from coupling with a conductor of the respective series connection with the other generators.

Preferably, each of said generators comprises a base unit that is installed on the seabed, with electrical connections to adjacent generators being made via said base unit, and a turbine-generator unit that engages removably with said base unit such that the turbine-generator may be removed from the sea for maintenance and replaced by another similar unit.

Preferably, the apparatus is arranged to generate electricity from tidal water flow, said dc output generators being each disposed in the tidal water flow and arranged to generate dc electricity in response to said flow.

Preferably, each of said generators comprises an annular turbine rotor arranged to be driven in rotation by the tidal flow.

Preferably, said turbine rotor serves as a rotor of the respective generator.

The apparatus may be arranged to generate electricity from the rise and fall of tide.

The apparatus may be arranged to generate electricity from wave energy.

In another aspect, the invention provides a method of generating electricity from marine energy, comprising the steps of disposing in a marine environment a plurality of dc output generators, each arranged to be driven directly or indirectly by said marine energy to generate dc electricity, the outputs of the generators being connected in series to produce a summed voltage that it is greater than the output voltage of each generator, wherein said generators are arranged in a plurality of strings that are connected in parallel, each string comprising a plurality of the generators connected in series.

Preferably, such a method is carried out by apparatus according to any of the preceding aspects of the invention.

For a better understanding of the invention, and to show how embodiments of the same may be carried into effect, reference will now be made, by way of example, to the accompanying diagrammatic drawings, in which:
Figure 1 is a schematic diagram of a tidal energy farm comprising a matrix of dc output generators;
Figure 2 illustrates an individual generator of Figure 1, in front elevation;
Figure 3 is a plan view of the inside of a base unit of the generator of Figure 2, illustrating electrical connections;
Figure 4 is a plan view of the inside of a summation device; and
Figure 5 is a cross-sectional view of the summation device of Figure 4.

In the figures, like references denote like or corresponding parts.

It is envisaged that tidal power generation finds principal application in coastal regions - that is, in the sea. However, it is possible to harness tidal power in rivers and estuaries. For ease of reference, embodiments of the present invention are presented here in sea environments, but it is to be understood that, in the context of this specification, expressions such as "sea bed" include inland equivalents such as "river bed".

The illustrated tidal energy farm 1 comprises a matrix of twenty-five direct current (dc) output generators 2, which are arranged in five strings A to E. In this example, each string comprises five generators 2 connected electrically in series. Each generator 2 can generate a maximum voltage of 5Kv at a maximum current of 500 amps. Thus, each generator 2 is a 2.5MW generator. The outputs of all of the strings A to E are connected in parallel to a positive output cable 3 and a negative output cable 4. Thus, the maximum output power on the cables 3 and 4 is 25 Kv at 2500 amps - that is, a total of 62.5 MW.

Because all of the generators 2 are dc generators, their output voltages can easily be summed as a result of their series connections. The outputs of all of the strings A to E can likewise can be summed, simply by connecting them together in parallel.

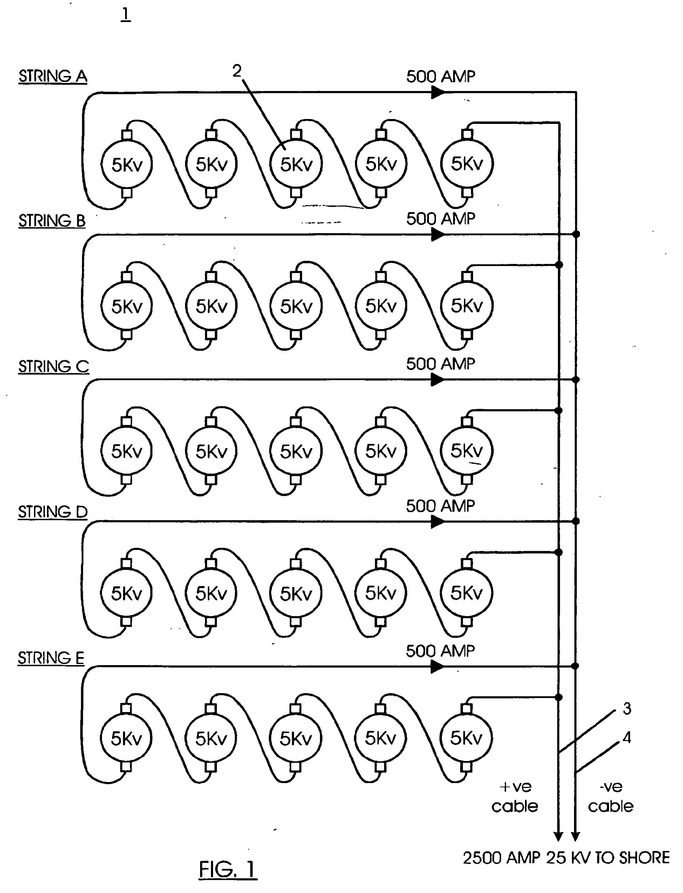

The matrix of generators 2 as illustrated in Figure 1 has a number of advantages. Firstly, connectors and components with an insulation level of 25 Kv dc are widely available. 25 Kv dc is a standard traction rating in Europe. Cables of 500 amps 25 Kv dc capacity are readily available and may be handled easily. Cables rated at 2500 amps 25 Kv dc can be handled without inconvenience. All cables of these ratings are available for undersea installation.

An advantage of providing a string of five generators 2 in each of the strings A to E is that each of the generators 2 can be of relatively modest size. An output capacity of 2.5 MW does not necessitate a massive construction. Therefore, the generators 2 can be transported and installed on the seabed relatively easily and can readily be removed for maintenance and replacement.

The dc generators 2 can be of any convenient design. In use, they are positioned on the seabed in the path of tidal currents such that, when a tidal current (or "tidal stream") flows, turbines or other drive means of the generators 2 are caused to turn and this motion is employed for the generation of dc power. As noted above, the term "dc generator" is used in this specification conveniently to refer to not only an electrical machine that generates dc power, but also the prime mover that causes the electrical machine to be driven. These may be distinct units that are mechanically connected. Ideally, they are provided as a unitary device, such that the rotor of a turbine is also the rotor of the electrical machine.

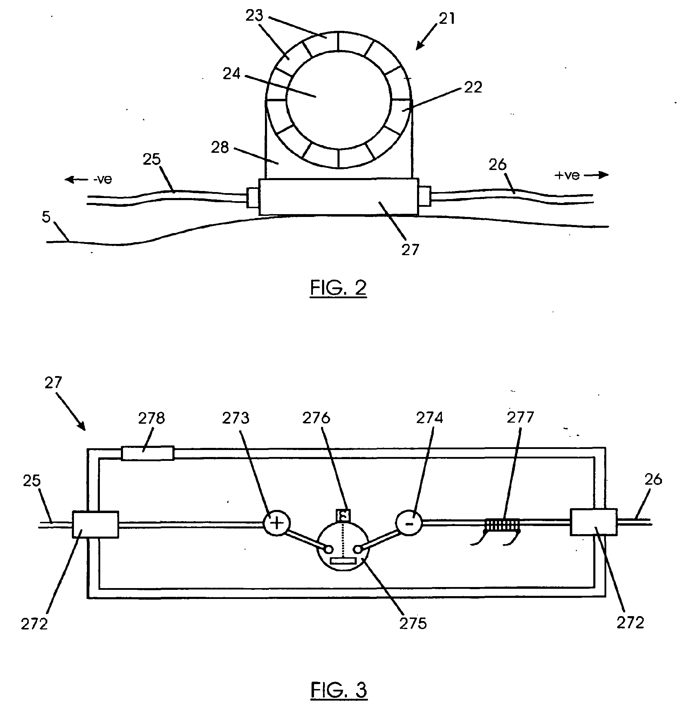

The dc generator 21 that is shown in Figure 2 comprises a turbine rotor 22 with vanes 23, placed across the general direction of tidal currents. Thus, as tidal currents flow, water flows through the generator 21, causing the rotor 22 to rotate. The design of the generator 21 is such that the rotor 22 may rotate in either direction, dependant upon the direction of tidal current flow. As may be seen, the rotor 22 is annular, so that water may flow through its centre. This may make the generator 21 relatively friendly towards marine life and minimise interference of water flow between adjacent generators. The turbine rotor 22 also serves as the rotor of the electrical machine to generate dc power. In Figure 2, a cable 25 is connected to the negative terminal of a preceding generator of the respective series string and a cable 26 is connected to the positive terminal of a succeeding generator in the series string.

The generator 21 comprises a base unit 27 that is installed on the seabed 5 and a turbine-generator unit 28 that engages removably with the base unit 27 such that the turbine-generator unit 28 may be removed from the sea for maintenance and replacement by another similar unit.

As shown in Figure 3, the base unit 27 comprises a generally rectangular, watertight frame 271 provided with watertight bushings 272 through which the respective cables 25, 26 pass, to connect the generator 2 to the next generators in the series string. Cables 25 and 26 terminate in 500 amp terminal blocks 273 and 274 respectively. The terminal blocks 273, 274 are arranged to make electrical connections with corresponding output terminals on the turbine-generator unit 28.

Also connected to the terminals 273, 274 is a 25 Kv vacuum switch 275, which is operated by a solenoid 276 that draws power from a series shunt 277 connected to the cable 26.

The solenoid 276 is adapted to be operated in response to a signal which may, for example, be received over a radio or acoustic link. Upon receipt of an actuating signal, the vacuum switch 275 is operated to short the terminals 273, 274 together and thereby short out the output of the turbine-generator unit 28. Thus, the turbine-generator unit 28 may be removed from the base unit 27 for maintenance and, whilst maintenance is carried out, a spare turbine-generator unit 28 may be engaged with the base unit 27, to afford minimum downtime.

Suitable means is provided to afford good electrical contact between the terminals 273, 274 on the base unit 27 and the corresponding terminals on the underside of the turbine-generator unit 28. For example, the base of the turbine-generator unit 28 may be a close fit on the upper surface of the base unit 27 such that, as both units are brought together, water is largely squeezed out from between the two units 27, 28 and a substantially watertight seal is achieved between them. Upon opening the vacuum switch 275 and current passing along cables 25, 26, any small amounts of water between terminals 273, 274 may ready be vaporised and expelled via a one-way valve.

The base unit frame 271 may comprise a metal frame that contains concrete or other ballast such that it is retained on the seabed 5 by a high gravitational force. Anchoring means may additionally be employed to secure the base unit 27 positively to the seabed 5. Access port 278 provides access to the inside of the base frame 271.

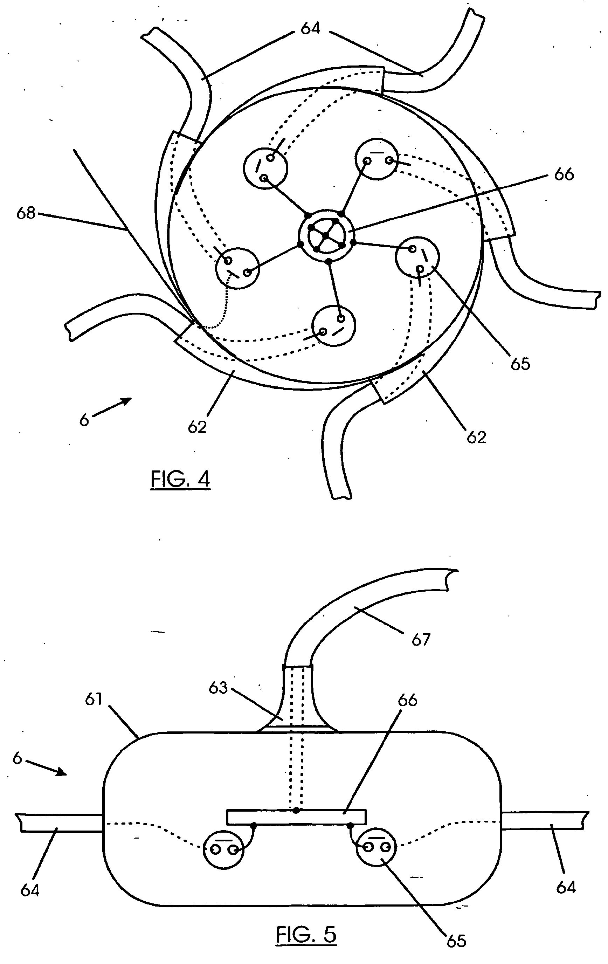

The outputs of the five strings A to E are summed in the summation device 6 that is shown in Figures 4 and 5. A respective summation device 6 is provided for each of the positive and negative cables 3 and 4.

The summation device 6 comprises a watertight housing 61 provided with five input ports 62 and one output port 63. A respective output cable 64 from each of the strings A to E passes through a respective one of the input ports 62, each of which includes a watertight bushing for the cable. The central conductor of each cable 64 is connected to one terminal of a respective vacuum interrupter 65, the other terminal of which is connected to a solid copper ring 66, which serves as an output bus. The central conductor of an output cable 67 is also connected to the output bus 66. A control cable 68 enters the summation device 6 via one of the input ports 62 and is arranged to control operation of the vacuum interrupters 65 selectively.

Thus, with the vacuum interrupters 65 closed, all of the conductors from the respective generator strings A to E are interconnected by the copper bus ring 66, which is also connected to the output cable 67. Thus, a reliable output connection is made to the substantial output cable 67, by means of the summation device 6.

In the event that there is a fault in one of the strings A to E, or in any case, if it is desired to disconnect the output from any one of the strings, one or more of the vacuum interrupters 65 may be actuated in response to an appropriate signal on the control cable 68. Reconnection of a disconnected string may be made by closing the respective vacuum interrupter 65, again in response to an appropriate control signal on the control cable 68.

The sheaths and armouring of the various cables 64, 67 are bound to the metal body of the housing 61 and thereby cabled to shore as a neutral connection. Constructional details of undersea cables, such as sheathing, armouring, insulation, etc., are well known to the skilled reader and are therefore not shown or described in detail here. Although separate positive and negative cables 3 and 4 are shown, it is possible to have a single cable which contains both positive and negative conductors. This may typically be provided downstream of the summation device 6. The technology for such cables is well known. A single, bipolar cable may be easier to lay and maintain undersea than two separate cables.

Thus, the illustrated tidal energy farm 1 can readily provide dc power in commercially useful quantities, utilising a high-efficiency transmission level of 25 Kv dc, whilst employing individual generators that have a maximum output voltage of only 5Kv. It is possible to transmit power at 25Kv dc for distances of tens of kilometres, at relatively high efficiency. Thus, for example, the tidal energy farm 1 may readily provide power that is transmitted without inversion or transforming for distances of up to 30 kilometres or more, with a transmission efficiency of the order of 98%. The use of dc power exclusively undersea avoids complications that can arise with ac power generation, summation and transmission.

At the end of the dc line, power inversion and/or transforming to any desired commercial level can be carried out and this can typically be done with convenience on shore. Alternatively, inversion to ac may be carried out downstream of the summation devices 6 and ac power transmitted from the output of the farm 1 to the shore, over suitable cables.

Whilst a 5 x 5 matrix of dc generators 2 has been illustrated and described by way of example and operates with particular advantage, matrices of other dimensions can usefully be employed.

The matrix of dc generators 2 is preferably arranged physically on the seabed in such a way as to provide minimum interference of water flow between generators. The topography of the seabed may present an obstacle to the generators being arranged in a regular array and, in any event, an irregular array may be preferable to reduce interference. Preferably, adjacent generators are placed at least 100 metres apart and possibly up to 200 or 250 metres. With 250 metre spacing, a 5 x 5 matrix may occupy a floor area of approximately 1000 metres square.

Although the illustrated embodiments of the invention are particularly designed and suited to the generation of electrical power from tidal streams, it is possible to adapt the invention to the generation of power from tidal flow represented by rising and falling tides. Also, the invention may be adapted to the generation of power from wave energy, which is predominantly derived from the action of wind upon the water surface.

In this specification, the verb "comprise" has its normal dictionary meaning, to denote non-exclusive inclusion. That is, use of the word "comprise" (or any of its derivatives) to include one feature or more, does not exclude the possibility of also including further features.

## Claims

1. Apparatus for generating electricity from marine energy, the apparatus comprising a plurality of electric generators (2), **characterised in that** each of the generators (2) is a dc output generator (2) arranged to generate dc electricity in response to the expenditure of marine energy, the outputs of the generators (2) are connected in series to produce a summed voltage that it is greater than the output voltage of each generator, and the generators (2) are arranged in a plurality of strings that are connected in parallel, each string comprising a plurality of the generators (2) connected in series.

2. Apparatus according to claim 1, wherein said summed voltage is 25Kv or less and/or said plurality of strings is arranged to produce a total output current of 2500 amperes or less.

3. Apparatus according to claim 1 or 2, comprising an output bus (66) connected to receive the outputs of said strings and isolating means (65) arranged to isolate any desired string from the output bus (66).

4. Apparatus according to claim 3, wherein said isolating means comprises a plurality of circuit-breakers (65), each arranged in series with a respective one of said strings, and control means (68) for controlling operation of said circuit breakers (65).

5. Apparatus according to claim 3 or 4, comprising a waterproof housing (61) having a plurality of ports (62,63), wherein said output bus (66) is contained within said housing (61), an output cable (67) connected to said output bus (66) passes through a first one of said ports (63) and input cables (64) connecting the outputs of said strings to said output bus (66) pass through the other said ports (62).

6. Apparatus according to claim 5, wherein said housing (61) is of generally circular shape, said first port (63) is located at or adjacent a centre of the circle, the other said ports (62) are located at or adjacent the periphery of the circle, and said output bus (66) is of generally circular shape.

7. Apparatus according to any of the preceding claims, further comprising output conductors (3,4) arranged to conduct the summed output of said generators (2) to a shore station as dc power.

8. Apparatus according to any of the preceding claims, further comprising inverter means arranged to invert the summed dc output of the generators (2) to ac power.

9. Apparatus according to any of the preceding claims, further comprising bypass means (275) arranged selectively to bypass any desired one of the generators (2) whilst maintaining series continuity of the other generators (2) in the series.

10. Apparatus according to claim 9, wherein said bypass means comprises a respective switch (275) in parallel with each of the generators (2) and power for operating each switch is derived from coupling (277) with a conductor of the respective series connection with the other generators (2).

11. Apparatus according to any of the preceding claims, wherein each of said generators (2) comprises a base unit (27) that is installed on the seabed (5), with electrical connections (25,26) to adjacent generators (2) being made via said base unit (27), and a turbine-generator (28) unit that engages removably with said base unit (27) such that the turbine-generator (28) may be removed from the sea for maintenance and replaced by another similar unit.

12. Apparatus according to any of claims 1 to 11 and arranged to generate electricity from tidal water flow, wherein said dc output generators (2) are each disposed in the tidal water flow and arranged to generate dc electricity in response to said flow.

13. Apparatus according to claim 12, wherein each of said generators (2) comprises an annular turbine rotor (22) arranged to be driven in rotation by the tidal flow.

14. Apparatus according to any of claims 1 to 11 and arranged to generate electricity from the rise and fall of tide or from wave energy.

15. A method of generating electricity from marine energy, comprising the steps of disposing in a marine environment a plurality of electric generators (2), each arranged to be driven directly or indirectly by said marine energy to generate electricity, **characterised in that** each of the generators (2) is a dc output generator (2) arranged to generate dc electricity, the outputs of the generators (2) are connected in series to produce a summed voltage that it is greater than the output voltage of each generator, and the generators (2) are arranged in a plurality of strings that are connected in parallel, each string comprising a plurality of the generators (2) connected in series.

## Patentansprüche

1. Vorrichtung zur Erzeugung von Elektrizität aus Meeresenergie, wobei die Vorrichtung eine Vielzahl von Stromgeneratoren (2) umfasst, **dadurch gekennzeichnet, dass** jeder der Generatoren (2) ein Gleichstrom-Ausgangsgenerator (2) ist, der derart angeordnet ist, um Gleichstrom als Reaktion auf den Verbrauch von Meeresenergie zu erzeugen, wobei die Ausgänge der Generatoren (2) in Reihe geschaltet sind, um eine Gesamtspannung zu produzieren, die höher ist als die Ausgangsspannung jedes Generators, und die Generatoren (2) in einer Vielzahl von Strängen angeordnet sind, die parallel geschaltet sind, wobei jeder Strang eine Vielzahl von in Reihe geschalteten Generatoren (2) umfasst.

2. Vorrichtung nach Anspruch 1, wobei die Gesamtspannung 25 kV oder weniger beträgt und/oder die Vielzahl von Strängen derart angeordnet ist, um eine Gesamtausgangsstromstärke von 2500 Ampere oder weniger zu erzeugen.

3. Vorrichtung nach Anspruch 1 oder 2, einen Ausgangsbus (66), der verbunden ist, um die Ausgänge der Stränge aufzunehmen, und Isolierungsmittel (65) umfassend, um jeden gewünschten Strang von dem Ausgangsbus (66) zu trennen.

4. Vorrichtung nach Anspruch 3, wobei die Isolierungsmittel eine Vielzahl von Leitungsschutzschaltern (65), wobei jeder bezüglich eines entsprechenden der Stränge in Reihe geschaltet ist, und Steuermittel (68) zum Steuern des Betriebs der Leitungsschutzschalter (65) umfassen.

5. Vorrichtung nach Anspruch 3 oder 4, ein wasserdichtes Gehäuse (61) umfassend, das eine Vielzahl von Anschlüssen (62, 63) aufweist, wobei der Ausgangsbus (66) innerhalb des Gehäuses (61) enthalten ist, wobei eine Ausgangsleitung (67), die mit dem Ausgangsbus (66) verbunden ist, durch einen ersten der Anschlüsse (63) verläuft und Eingangsleitungen (64), welche die Ausgänge der Stränge mit dem Ausgangsbus (66) verbinden, durch die anderen Anschlüsse (62) verlaufen.

6. Vorrichtung nach Anspruch 5, wobei das Gehäuse (61) eine im Allgemeinen kreisförmige Form aufweist, wobei der erste Anschluss (63) an oder benachbart zu dem Mittelpunkt des Kreises angeordnet ist, die anderen Anschlüsse (62) an oder benachbart zu der Peripherie des Kreises angeordnet sind und der Ausgangsbus (66) eine im Allgemeinen kreisförmige Form aufweist.

7. Vorrichtung nach einem der vorhergehenden Ansprüche, ferner Ausgangsleiter (3, 4) umfassend, die derart angeordnet sind, um die Gesamtleistung der Generatoren (2) als Gleichstrom an eine Küstenstation zu leiten.

8. Vorrichtung nach einem der vorhergehenden Ansprüche, ferner Wechsehichtermittel umfassend, die derart angeordnet sind, um die Gleichstromgesamtleistung der Generatoren (2) in Wechselstrom umzuwandeln.

9. Vorrichtung nach einem der vorhergehenden Ansprüche, ferner Überbrückungsmittel (275) umfassend, die selektiv angeordnet sind, um jeden gewünschten der Generatoren (2) zu überbrücken, während die Kontinuität der Reihenschaltung der anderen Generatoren (2) in der Reihenschaltung beibehalten wird.

10. Vorrichtung nach Anspruch 9, wobei die Überbrückungsmittel einen entsprechenden Schalter (275) umfassen, der parallel zu jedem der Generatoren (2) geschaltet ist, und der Strom für den Betrieb jedes Schalters stammt aus der Kopplung (277) mit einem Leiter der entsprechenden Reihenschaltung mit den anderen Generatoren (2).

11. Vorrichtung nach einem der vorhergehenden Ansprüche, wobei jeder der Generatoren (2) eine Basiseinheit (27), die im Meeresboden (5) befestigt ist, mit elektrischen Verbindungen (25, 26) zu benachbarten Generatoren (2), die durch die Basiseinheit (27) hergestellt werden, und eine Turbinengeneratoreinheit (28) umfasst, welche die Basiseinheit (27) abnehmbar in Eingriff nimmt, sodass der Turbinengenerator (28) zur Wartung aus dem Meer entnommen werden kann und durch eine ähnliche Einheit ersetzt werden kann.

12. Vorrichtung nach einem der Ansprüche 1 bis 11 und derart angeordnet, um Elektrizität aus der Gezeitenströmung zu erzeugen, wobei die Gleichstrom-Ausgangsgeneratoren (2) jeweils in der Gezeitenströmung angeordnet sind, und derart angeordnet sind, um Gleichstrom als Reaktion auf die Strömung zu erzeugen.

13. Vorrichtung nach Anspruch 12, wobei jeder der Generatoren (2) einen ringförmigen Turbinenrotor (22), umfasst, der derart angeordnet ist, um durch die Gezeitenströmung in Rotation versetzt zu werden.

14. Vorrichtung nach einem der Ansprüche 1 bis 11 und derart angeordnet, um Elektrizität aus Ebbe und Flut oder aus Wellenenergie zu erzeugen.

15. Verfahren zur Erzeugung von Elektrizität aus Meeresenergie, die Schritte des Anordnens einer Vielzahl von Stromgeneratoren (2) in einer Meeresumgebung umfassend, wobei jeder derart angeordnet ist, um direkt oder indirekt durch die Meeresenergie angetrieben zu werden, um Elektrizität zu erzeugen, **dadurch gekennzeichnet, dass** jeder der Generatoren (2) ein Gleichstrom-Ausgangsgenerator (2) ist, der derart angeordnet ist, um Gleichstrom zu erzeugen, wobei die Ausgänge der Generatoren (2) in Reihe geschaltet sind, um eine Gesamtspannung zu produzieren, die höher ist als die Ausgangsspannung jedes Generators, und die Generatoren (2) in einer Vielzahl von Strängen angeordnet sind, die parallel geschaltet sind, wobei jeder Strang eine Vielzahl von in Reihe geschalteten Generatoren (2) umfasst.

## Revendications

1. Un appareil de production d'électricité par l'énergie des courants marins, l'appareil comprenant une pluralité de générateurs électriques (2), **caractérisé en ce que** chacun des générateurs (2) est un générateur à courant continu (2) agencé pour produire de l'énergie électrique en réponse à une dépense en énergie de courants marins, les courants produits par les générateurs (2) étant connectés en série pour la production d'une tension additionnée, supérieure à la tension de sortie de chaque générateur, et les générateurs (2) étant disposés en une série de chaînes reliées en parallèle, chaque chaîne étant composée d'une série de générateurs (2) connectés en série.

2. Un appareil selon la revendication 1, ladite tension additionnée étant égale à 25 kV, ou moins, et/ou ladite pluralité de chaînes étant agencée pour produire un courant de sortie total de 2500 ampères, ou moins.

3. Un appareil selon la revendication 1 ou 2, comprenant un bus de sortie (66) connecté pour recevoir les courants de sortie desdites chaînes, et un sectionneur (65) agencé pour isoler une chaîne désirée du bus de sortie (66).

4. Un appareil selon la revendication 3, ledit sectionneur comprenant une pluralité de disjoncteurs (65), chacun étant disposé en série avec sa chaîne correspondante, et un régulateur (68) assurant la régulation du fonctionnement desdits disjoncteurs (65).

5. Un appareil selon la revendication 3 ou 4, comprenant un boîtier étanche (61) comprenant une pluralité d'orifices (62,63), ledit bus de sortie (66) étant contenu dans ledit boîtier (61), un câble de sortie (67), connecté audit bus de sortie (66), passant par un premier desdits orifices (63), et des câbles d'entrée (64) raccordant les sorties desdites chaînes audit bus de sortie (66) passant par les autres orifices (62).

6. Un appareil selon la revendication 5, ledit boîtier étanche (61) étant de forme généralement circulaire, ledit premier orifice (63) étant situé au centre du cercle, ou adjacent à celui-ci, les autres orifices (62) étant situés sur le pourtour du cercle, ou étant adjacents à celui-ci, et ledit bus de sortie (66) étant de forme généralement circulaire.

7. Un appareil selon une quelconque des revendications précédentes, comprenant en outre des conducteurs de sortie (3,4) agencés pour amener la tension additionnée desdits générateurs (2) comme courant continu à une centrale à terre.

8. Un appareil selon une quelconque des revendications précédentes, comprenant en outre des convertisseurs agencés pour convertir la tension additionnée desdits générateurs (2) en tension à courant alternatif.

9. Un appareil selon une quelconque des revendications précédentes, comprenant en outre une dérivation (275) agencée de façon sélective pour mettre un des générateurs (2) en dérivation, tout en maintenant la continuité en série des autres générateurs (2) de la série.

10. Un appareil selon la revendication 9, ladite dérivation comprenant un commutateur correspondant (275) monté en parallèle avec chacun des générateurs (2), le courant nécessaire pour l'utilisation de chaque commutateur étant dérivé du couplage (277) avec un conducteur du raccordement en série correspondant avec les autres générateurs (2).

11. Un appareil selon une quelconque des revendications précédentes, chacun des générateurs (2) comprenant un socle (27) installé sur le fond marin (5), des raccordements électriques (25,26) avec les générateurs (2) adjacents étant effectués via ledit socle (27), et un générateur à turbine (28) s'engageant de façon amovible avec ledit socle (27) de façon à pouvoir enlever du fond le générateur à turbine (28) pour des interventions d'entretien, et le remplacer par un autre appareil similaire.

12. Un appareil selon une quelconque des revendications 1 à 11, agencé pour produire de l'électricité par les courants des marées, chacun desdits générateurs (2) de courant continu étant disposé dans le courant de marée, de façon à produire de l'électricité à courant continu en réponse audit courant.

13. Un appareil selon la revendication 12, chacun desdits générateurs (2) comprenant un rotor annulaire de turbine (22) agencé de façon à être entraîné par rotation par le courant de marée.

14. Un appareil selon une quelconque des revendications 1 à 11, agencé pour produire de l'électricité par le flux et le reflux des marées, ou par l'énergie des vagues.

15. Une méthode de production d'électricité par l'énergie des courants marins, comprenant l'installation en milieu marin d'une pluralité de générateurs électriques (2), chacun étant entraîné directement ou indirectement par lesdits courants marins pour produire de l'énergie électrique, **caractérisée en ce que** chacun des générateurs (2) est un générateur de courant continu (2) agencé pour assurer la production de courant continu, les courants produits par le générateurs (2) étant raccordés en série pour produire une tension additionnée supérieure à la tension de sortie de chaque générateur, et les générateurs (2) étant disposés en une série de chaînes reliées en parallèle, chaque chaîne étant composée d'une série de générateurs (2) connectés en série.
